# EUROPEAN PATENT APPLICATION

(11) **EP 4 559 794 A1**
(43) Date of publication of application: **28.05.2025**
(21) Application number: 23211309.2
(22) Date of filing: 21.11.2023
(51) Int. Cl.: B62M 3/08

(54) **BICYCLE PEDAL**

(71) Applicant: Golec, Marcin, London SW19 2RR (GB)
(72) Inventor: Golec, Marcin, London SW19 2RR (GB)
(74) Representative: Farago-Schauer, Peter Andreas

(57) **Abstract**

The present invention pertains to a flat bicycle pedal comprising: a pedal body housing (7), the pedal body housing (7) having a housing longitudinal axis (B) and holding therein a pedal axle (1) having an axle longitudinal axis (A), wherein the pedal axle (1) is rotatable around the axle longitudinal axis (A), wherein the pedal body housing (7) is made of a composite material including a polymer; a first pedal body spacer element (8A) arranged on one side of the pedal body housing (7) and a second pedal body spacer element (8B) arranged on the opposite side of the pedal body housing (7), wherein the first pedal body spacer element (8A) and the second pedal body spacer element (8B) are made of a composite material including a polymer; a pedal body platform assembly (9) comprising a first pedal body platform plate (9A) arranged on one face of the pedal body housing (7) and a second pedal body platform plate (9B) arranged on an opposite face of the pedal body housing (7), the first pedal body platform plate (9A) and the second pedal body platform plate (9B) providing for a support for a shoe sole of a cyclist on the bicycle pedal, wherein the first pedal body platform plate (9A) and the second pedal body platform plate (9B) extend such as to sandwich therebetween the pedal body housing (7) and the first pedal body spacer element (8A) and the second pedal body spacer element (8B) and wherein the first and second pedal body platform plates (9A, 9B) are made of metal; and mounting pins (10) for securing the first pedal body platform plate (9A) and the second pedal body platform plate (9B) to the pedal body housing (7) and to the first pedal body spacer element (8A) and the second pedal body spacer element (8B).

## Description

### BACKGROUND OF THE INVENTION

The present invention is directed to an improved bicycle pedal, in particular a flat bicycle pedal with a light, robust and compact construction which at the same time allows a good grip for the shoe of the cyclist.

### BACKGROUND ART

Generally, bicycle pedals are well known in the art and basically there are two types of bicycle pedals.

One type of bicycle pedal is known as the clipless pedal, wherein the cyclist needs to wear a special shoe with a cleat which is clipped into the bicycle pedal, hence forming a firm connection between the sole of the shoe of the cyclist and the clipless pedal.

Another type of bicycle pedal is the flat pedal, wherein the cyclist merely places any conventional shoe on the pedal and is ready to go.

Prior art bicycle pedals, in particular flat bicycle pedals, have a very rigid one-piece aluminum or composite structure and are not comfortable to use.

Furthermore, prior art pedals, in particular flat pedals, have hanging plastic parts on the outer end which could crack if force is applied to the pedal body.

### OBJECTS AND SUMMARY OF THE INVENTION

Accordingly, it is an object of the present invention to provide for a bicycle pedal, in particular a flat bicycle pedal, which is comfortable to use while having a good structural strength.

Within the framework of the above object or on its own, it is a further object of the present invention to provide for a bicycle pedal, in particular a flat bicycle pedal, which is compact in use and which avoids hanging parts that may crack during use.

Yet another object of the present invention, within the framework of the above objects or on its own, is to provide for a bicycle pedal, in particular a flat bicycle pedal, which is relatively lightweight.

Yet another object of the present invention, within the framework of the above objects or on its own, is to provide for a bicycle pedal which provides a better grip for the shoe of the cyclist.

The above objects as well as further objects and aims which will become apparent hereinafter are achieved by a bicycle pedal as defined in claim 1.

Further advantageous features of the present invention are defined in the appended dependent claims.

The features and advantages of the present invention will become clearer from the following detailed description of the preferred embodiment thereof, made with reference to the attached drawings.

### DESCRIPTION OF THE DRAWINGS

Figure 1 is an exploded view generally showing the basic components of a bicycle pedal including the improvement according to the present invention embodied as a flat pedal;
Figure 2 is a front view as seen along a longitudinal axis of a pedal axle of the bicycle pedal of Fig. 1;
Figure 3 is a top view of the bicycle pedal of Fig. 1 or Fig. 2;
Figure 4 is a cross section along the line IV-IV of Fig. 2;
Figure 5 is a further exploded view generally showing some of the basic components of the bicycle pedal of Fig. 1;
Figure 6 is a further exploded view showing a detail of Fig. 5; and
Figure 7 is a further exploded view showing a detail of Fig. 6.

### DETAILED DESCRIPTION OF THE PREFERRD EMBODIMENTS

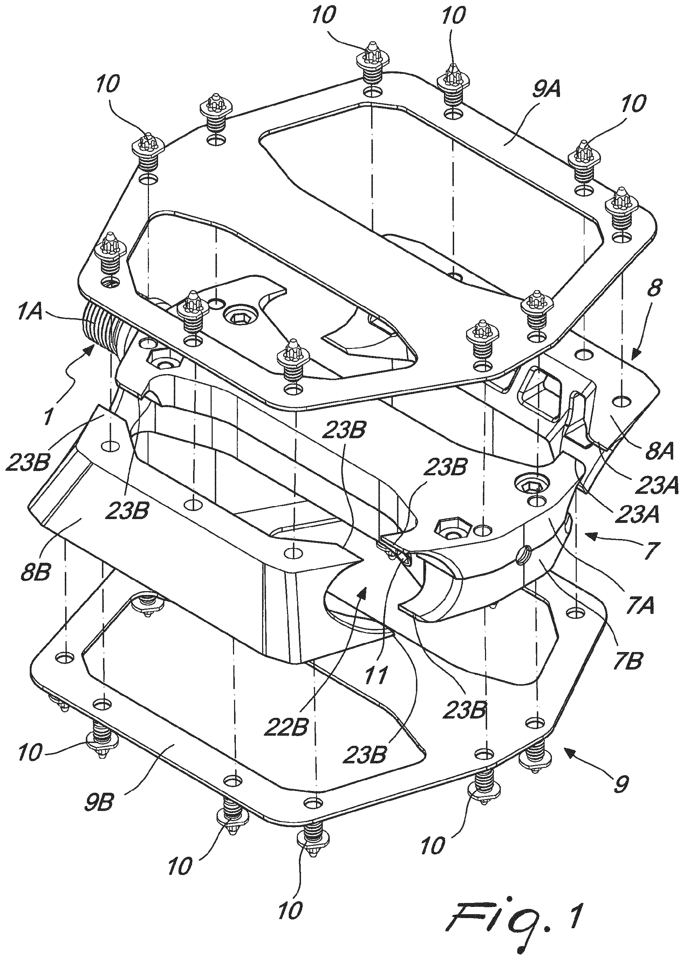

In the following, the present invention will be described in detail in connection with the currently preferred embodiments thereof and with reference to the appended Figures 1 to 7.

As shown in Fig. 1 a flat bicycle pedal including the improvements of the present invention comprises a pedal body housing 7, the pedal body housing 7 having a housing longitudinal axis B. The pedal body housing 7 is preferably made of a composite material including a polymer. Preferably the pedal body housing 7 is made by injection molding with a process wherein the polymer is melted and injected into a suitable mold. The bicycle pedal of Figures 1 to 7 is embodied as a flat pedal. However, embodiments of the bicycle pedal as a clipless pedal are also envisaged.

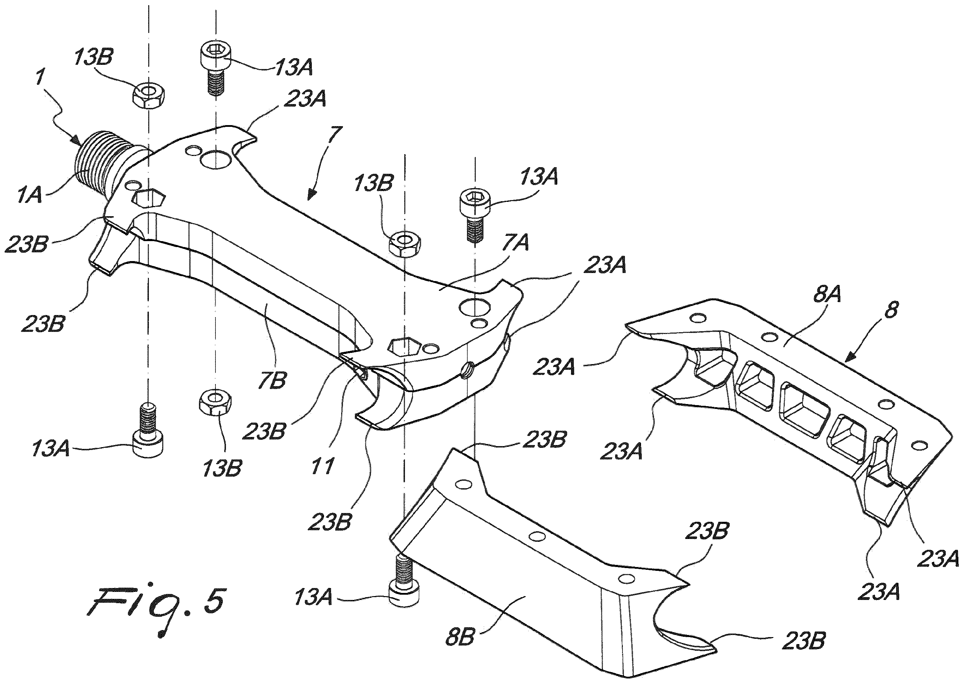

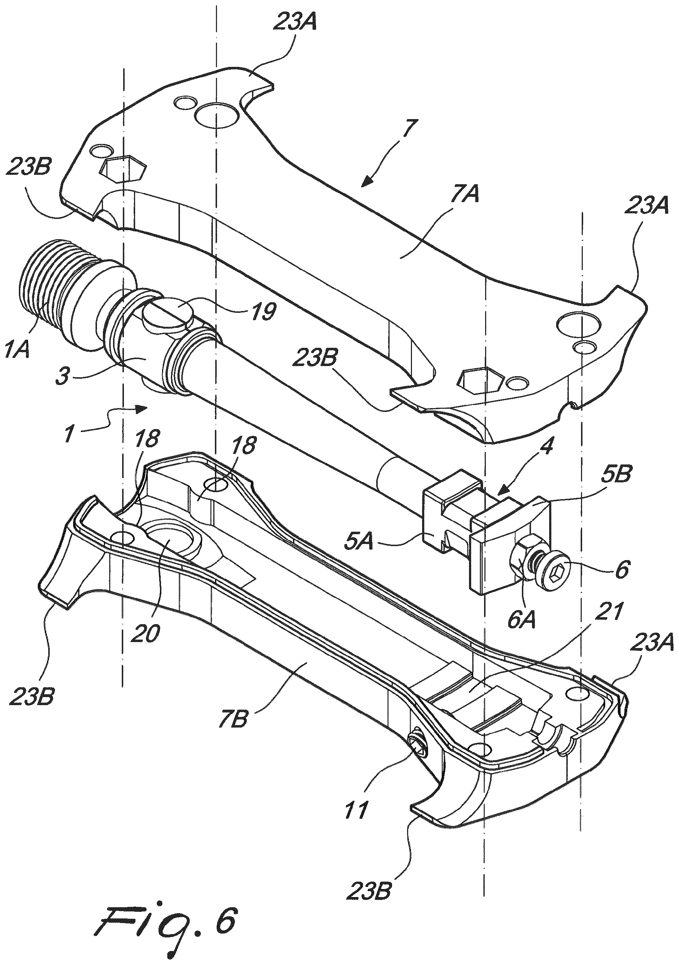

The pedal body housing 7 is formed of a first pedal body housing section 7A defining a first face of the pedal body housing 7 and providing for a support for a shoe sole of a cyclist on the bicycle pedal, and a second pedal body housing section 7B defining a second face of the pedal body housing 7 and providing for a support for a shoe sole of a cyclist on the bicycle pedal. As can best be seen in Fig. 5 or Fig. 6 both pedal body housing sections 7A and 7B have substantially flat faces facing outwardly of the pedal body housing 7 to provide for an optimal support surface for the shoe sole of a cyclist or for a pedal body platform plate 9 which is described in further detail hereinafter. In the case where the pedal body housing 7 is directly supporting the shoe sole of a cyclist, the two opposing faces are devised as non-slip surfaces. Otherwise, the pedal body platform plate 9 provides for the non-slip surfaces.

Preferably, the shape of the pedal body housing 7 is widened at its respective ends so that the overall shape of the pedal body housing 7 resembles that of a double anchor or a double T. In other words, the shape of the housing 6 resembles, preferably, two opposing anchors or two opposing letters T.

The first and second pedal body housing sections 7A and 7B are separably connected by fastening means 13A and 13B. Preferably, the fastening means for the pedal body housing are embodied as fastening screws 13A and nuts 13B. However, equivalent fastening means which are known to the person skilled in the art are equally envisaged as being part of the present disclosure. Equally preferably, the fastening means 13A and 13B do not extend beyond or are flush with the outwardly facing flat faces of the pedal body housing 7 in the assembled state thereof.

The pedal body housing 7 is devised to hold therein a pedal axle 1 having an axle longitudinal axis A.

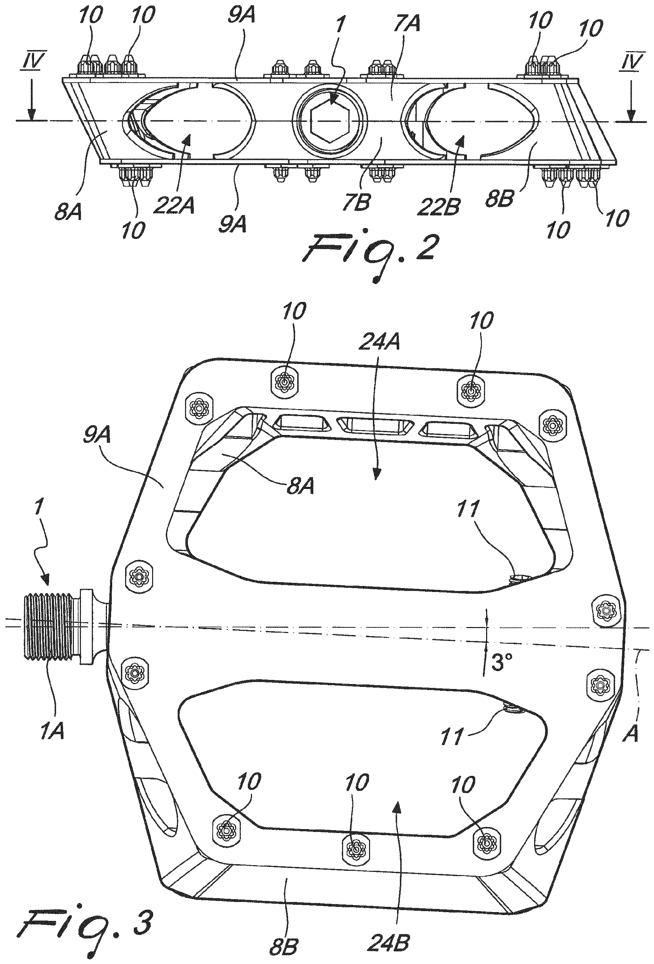

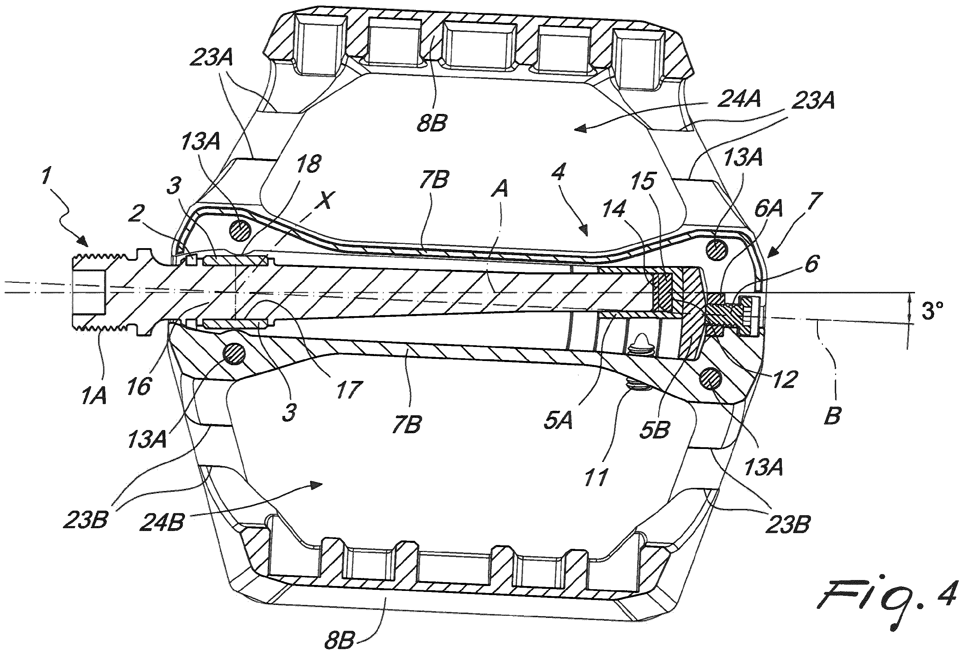

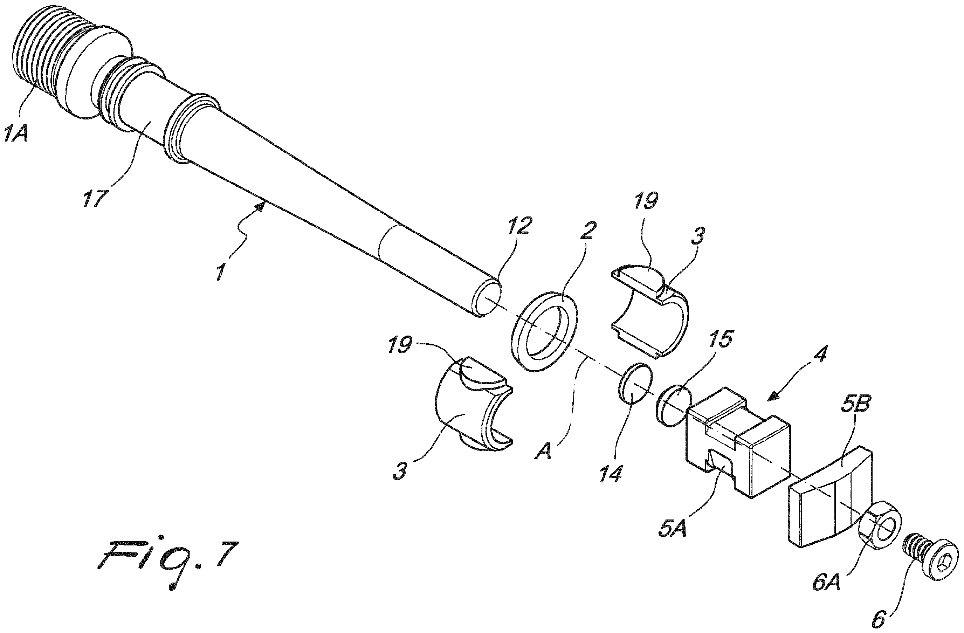

As can best be seen in Figures 4, 6 and 7, the pedal axle 1 has a substantially tubular shape and an inner end 16 which is close to the bicycle crank in the attached state of the pedal axle 1, and an outer end 12 which is opposite to the inner end 16. The pedal axle 1 comprises a pedal crank attachment section 1A arranged adjacent to the inner end 16 of the pedal axle 1 in order to allow the attachment of the bicycle pedal to a bicycle crank (not shown). As can best be seen in Fig. 3 or Fig. 4, the pedal body housing 7 has an opening at the inner end 16 of the pedal axle 1 from which the pedal crank attachment section 1A extends externally of the pedal body housing 7. The outer end 12 of the pedal axle 1 is not threaded and is rotatably held, as described hereinafter. As shown in Fig. 1 and Fig. 7, for example, a bearing seal 2 is provided at the inner end 16 of the pedal axle 1.

With further reference to Figures 4, 6 and 7, the inner end 16 of the pedal axle 1 is rotatably held by an inner bushing assembly 3, the inner bushing assembly 3 holding the pedal axle 1 in a rotatable manner substantially around the axle longitudinal axis A. The inner bushing assembly 3 is held on the pedal axle 1 in such a manner that a displacement of the inner bushing assembly 3 along the axle longitudinal axis A is impeded. Preferably, the inner bushing assembly 3 is retained in a suitably dimensioned recess 17 of the pedal axle 1.

Advantageously, the inner bushing assembly 3 is embodied as a slider bushing. Further preferably, as is known to the person skilled in the art, the inner bushing assembly 3 or the slider bushing is made of a suitable polymer or the like which allows the inner bushing assembly 3 or the slider bushing to swivel or oscillate, as discussed hereinbelow. Teflon is currently envisaged as a preferred polymer due to its ability to withstand a large number of swivel or oscillation cycles.

As shown for instance in Fig. 4 or Fig. 6, the inner bushing assembly 3 is arranged in the pedal body housing 7 such as to allow the swinging of the pedal body housing 7 at least on a swing plane around a swing axis X at the inner end 16 of the pedal axle 1 from a neutral position, wherein the housing longitudinal axis B is coincident with the axle longitudinal axis A, to a swung position, wherein the housing longitudinal axis B forms an angle with the axle longitudinal axis A. The swing axis X is preferably substantially perpendicular to the axle longitudinal axis A.

Preferably the inner bushing assembly 3 is arranged in the pedal body housing 7 such as to allow the swinging of the pedal body housing 7 on the swing plane around a swing axis X at the inner end 16 of the pedal axle 1 from the neutral position, wherein the housing longitudinal axis B is coincident with the axle longitudinal axis A, to the swung position, wherein the housing longitudinal axis B forms an angle with the axle longitudinal axis A. The swing axis X is preferably substantially perpendicular to the axle longitudinal axis A.

Preferably, the pedal body housing 7 includes protrusions 18 arranged (in the assembled state of the pedal axle 1) at the inner end 16 of the pedal axle 1, the protrusions 18 allowing the oscillation of the pedal body housing 7 substantially within a cone having its tip at the swing axis X. Preferably, the protrusions 18 are provided in each pedal body housing section 7A and 7B and are parts of the lateral surfaces of respective cylinders.

Advantageously, as can best be seen in Fig. 6, the inner bushing assembly 3 includes two opposing pivot elements 19 adapted to cooperate with matching bearings 20 provided in each pedal body housing section 7A and 7B such that, in the assembled state of the pedal axle 1, the oscillation of the pedal body housing 7 is limited to the swing plane around a swing axis X. In other words, the pivot elements 19 and the matching bearings 20 limit the movement of the pedal body housing 7 to one degree of freedom of movement along a circular arc segment. In the above advantageous arrangement, the inner bushing assembly 3 can be made of two symmetrical parts, each symmetrical part including a portion of the opposing pivot elements 19 such that the assembly of the inner bushing assembly 3 to the pedal axle 1 is facilitated, as the opposing pivot elements 19 can be snugly held in the matching bearings 20 preventing thus the separation of the symmetrical parts of the inner bushing assembly 3. Nevertheless, a person skilled in the art will appreciate that the symmetrical parts of the inner bushing assembly 3 can be otherwise joined and/or that the parts of the inner bushing assembly 3 do not need to be symmetrical at all, particularly, but not only in the case wherein the opposing pivot elements 19 and the matching bearings 20 are omitted.

With renewed reference to Figures 4, 6 and 7, an outer bushing assembly 4 is provided at the outer end 12 of the pedal axle 1. The outer bushing assembly 4 comprises an axle member 5A rotatably attached to the pedal axle 1 at the outer end 12 of pedal axle 1 and a brake shoe member 5B seated in the pedal body housing 7 in a position facing the axle member 5A. In the assembled state of the pedal axle 1, the brake shoe member 5B frictionally engages the axle member 5A, such that the frictional engagement between the axle member 5A and the shoe member 5B restrains the movement of the pedal body housing 7 about the swing axis X. Advantageously, providing the outer bushing assembly 4 at the outer end 12 of the pedal axle 1 (and at the outer end of the pedal body housing 7) avoids the bulky arrangements of the prior art, wherein the swinging mechanism is provided in the middle of the pedal.

Preferably, the axle member 5A is a slider bushing and its materials are similar to the materials of the inner bushing assembly 3. Also preferably, the surface of the axle member 5A facing the brake shoe member 5B is made of a material suitable to frictionally engage the brake shoe member 5B and may be a material different from that of the remainder of the axle member 5A.

Advantageously, the brake shoe member 5B is made of polymer and/or metal and at least its surface facing the axle member 5A is made of a material suitable to frictionally engage the axle member 5A.

According to a particularly advantageous aspect, the frictional engagement between the axle member 5A and the shoe member 5B restrains the movement of the pedal body housing 7 about the swing axis X such that the movement of the pedal body housing 7 about the swing axis X is only possible once a predefined threshold force has been overcome. In this way, the pedal body housing 7 remains in the position into which it has been moved by a cyclist even if the cyclist lifts his shoe from the pedal. In other words, the cyclist can swing the pedal body housing 7 about the swing axis X into an optimal position for cycling using a force exceeding the predefined threshold force and the optimal position will be maintained until a force exceeding the predefined threshold force will be applied again to the pedal even if the cyclist lifts his shoe from the pedal. Thus, any position within a given swing angle can be assumed by the pedal body housing 7 and that position will be maintained until a force exceeding the predefined threshold force will be applied by the cyclist to the pedal body housing 7.

According to another advantageous aspect, the frictional engagement between the axle member 5A and the shoe member 5B restrains the movement of the pedal body housing 7 about the swing axis X such that the movement of the pedal body housing 7 about the swing axis X is slowed down. In this way the motion of the pedal body housing 7 can be better controlled to achieve the optimal position.

The advantageous aspect of restraining the movement of the pedal body housing 7 about the swing axis X such that the movement of the pedal body housing 7 about the swing axis X is only possible once the predefined threshold force has been overcome, and the aspect of restraining the movement of the pedal body housing 7 about the swing axis X such that the movement of the pedal body housing 7 about the swing axis X is slowed down, can be combined or provided independently.

The outer bushing assembly 4 further advantageously comprises an adjustment member 6 arranged to be in contact with the shoe member 5B, the adjustment member 6 being displaceable along the housing longitudinal axis B to adjust the amount of friction between the axle member 5A and the shoe member 5B. The adjustment member 6 is preferably embodied as an adjustment screw accommodated in the pedal body housing 7 which is accessible through an axial opening of the pedal body housing 7, the adjustment screw cooperating with a screw nut 6A embedded in the pedal body housing 7.

The outer bushing assembly 4 further advantageously comprises at least one adjustment means 11 for adjusting the extent of swinging or the swing angle of the pedal body housing 7 on the swing plane around the swing axis X, the at least one adjustment means 11 being arranged in the pedal body housing 7 and being displaceable in a direction substantially perpendicular to the housing longitudinal axis B.

In a particularly advantageous embodiment, the outer bushing assembly 4 further comprises two adjustment means 11 for independently adjusting the extent of swinging or the swing angle of the pedal body housing 7 on the swing plane around the swing axis X, the adjustment means 11 being arranged symmetrically in the pedal body housing 7 and being displaceable in a direction substantially perpendicular to the housing longitudinal axis B. The symmetrical arrangement of the two adjustment means 11 makes it possible to independently adjust the swing angle on each side of the axle longitudinal axis A.

Preferably, the adjustment means 11 is embodied as a bolt engaging in a threading manner the pedal body housing 7 and acting on a lateral face of the axle member 5A.

Preferably, the angle of adjustment settable with the adjustment means 11 on one side of the axle longitudinal axis A is between 0 degrees and 10 degrees, more preferably between 4 degrees and 10 degrees. A further preferred range is less than 20 degrees on one side of the axle longitudinal axis A. However, the person skilled in the art will appreciate that the angle of adjustment may vary as need be. In fact, if the angle of adjustment is set to 0 degrees, this corresponds to a regular pedal with no swinging of the pedal body housing 7. If the cyclist wants to have the swinging of the pedal body housing 7 allowed only from one side of the axle longitudinal axis A to fit the cyclist's preference and abilities, this can be achieved by setting one of the adjustment means to 11 to 0 degrees. With the spring solution in the prior art this is not possible because springs can always be compressed by the same amount of distance.

The axle member 5A is preferably held in the pedal body housing 7 with one degree of freedom of movement in a seat 21, as can best be seen in Fig. 6. Further, preferably, respective opposite seats 21 are provided in the first pedal body housing section 7A and the second pedal body housing section 7B and the axle member 5A is substantially H shaped, as seen in a side view, as can be best seen in Fig. 6 or Fig. 7, to cooperate with the respective opposite seats 21.

The outer bushing assembly 4 further advantageously comprises a first spacer pad 14 interposed between the outer end 12 of the pedal axle 1 and the axle member 5A, and further preferably comprises a second spacer pad 15 interposed between the first spacer pad 14 and the axle member 5A. The first spacer pad 14 is preferably made of a polymer, for example Teflon, so as to provide for a suitable engagement surface in the rotation of the pedal axle 1 in the axle member 5A, and the second spacer pad 15 is preferably made of a rubber which provides advantageously for a damping effect. In the context of the present invention either the first spacer pad 14 or the second spacer pad 15 or both spacer pads 14 and 15 can be provided.

With further reference to Figures 1 to 3, the bicycle pedal further advantageously comprise a pedal body platform assembly 9 arranged on at least one face of the pedal body housing 7, the pedal body platform assembly 9 being provided with mounting pins 10 for securing the pedal body platform assembly 9 to the pedal body housing 7 and/or for allowing a non-slip support for a shoe sole of a cyclist on the pedal body platform assembly 9.

The pedal body platform assembly 9 comprises a first pedal body platform plate 9A arranged on one face of the pedal body housing 7 and a second pedal body platform plate 9B arranged on an opposite face of the pedal body housing 7, the first pedal body platform plate 9A and the second pedal body platform plate 9B being provided with respective mounting pins 10 for securing the first pedal body platform plate 9A and the second pedal body platform plate 9B to the pedal body housing 7 and/or for allowing a non-slip support for a shoe sole of a cyclist on the first pedal body platform plate 9A and on the second pedal body platform plate 9B.

With further reference to Figures 1 to 3, the bicycle pedal further advantageously comprises one pedal body spacer 8 arranged on both sides of the pedal body housing 7 and sandwiched between the first pedal body platform plate 9A and the second pedal body platform plate 9B, wherein the mounting pins 10 secure the pedal body spacer 8 to the first and second pedal body platform plates 9A and 9B. The pedal body spacer 8 comprises a first pedal body spacer element 8A arranged on one side of the pedal body housing 7 and a second pedal body spacer element 8B arranged on the opposite side of the pedal body housing 7.

The pedal body spacer 8, the pedal body spacer 8A and/or the second pedal body spacer element 8B are advantageously made of the same material as the pedal body housing 7, namely a composite material including a polymer. Preferred composite materials are those including glass fiber and a polymer. Other preferred materials comprise carbon fiber and a polymer. Also composite materials including Teflon or Kevlar or natural fiber like cotton and a polymer are deemed to be useful. Also more than one material with polymer can be mixed to make a composite. Preferred polymers are for instance PA6 or PA66 but other polymers can also be used.

The pedal body platform assembly 9, the first pedal body platform plate 9A and/or the second pedal body platform plate 9B are advantageously made of metal, in particular stainless steel or titanium.

The polymer-metal pedal platform construction provided by the combination of the pedal body housing 7, the pedal body spacer 8 and the pedal body platform assembly 9 is particularly advantageous since it allows more flexion in the pedal that is beneficial for the foot. Metal plates of the body platform assembly 9 provide structural strength to the pedal and act as springs that deform under the pressing force from the shoe, hence slightly elastically deforming the pedal body housing 7 and the pedal body spacer 8. The slight elastic deformation of the pedal body housing 7 and the pedal body spacer 8 provides a better grip for the shoe which is a very important feature of the pedal embodied as above. Prior art pedals usually have a very rigid one-piece aluminum or composite structure.

Advantageously, as shown for instance in Figures 1 and 2, the polymer-metal pedal platform comprises a first axial opening 22A formed between the first pedal body spacer element 8A and the one side of the pedal body housing 7 and a second axial opening 22B formed between the second pedal body spacer element 8B and the opposite side of the pedal body housing 7, wherein preferably the first and second axial openings 22A, 22B extend substantially parallel to the axle longitudinal axis A. The axial openings 22A and 22B increase the elastic deformation capability and reduce the weight of the polymer-metal pedal platform.

Moreover, as shown for instance in Figures 1, 2 and 5, advantageously the first and the second axial openings 22A, 22B are defined by respective arched sections 23A, 23B extending from the axial ends of the pedal body housing 7 and from the axial ends of the first and the second pedal body spacer elements 8A, 8B, such that substantially circular openings are formed at the respective axial ends of the pedal body housing 7 and of the first and the second pedal body spacer elements 8A, 8B.

Further, as shown for instance in Figures 1 and 2, advantageously, a first transversal opening 24A is defined between the first pedal body spacer element 8A and the pedal body housing 7 and a second transversal opening 24B is defined between the second pedal body spacer element 8B the pedal body housing 7, wherein preferably the first and second transversal openings 24A, 24B extend in a direction perpendicular to the pedal body platform assembly 9 and/or wherein preferably the first and second transversal openings 24A, 24B extend through the first pedal body platform plate 9A and the second pedal body platform plate 9B to create a through opening therebetween. This further decreases the weight of the polymer-metal pedal platform.

It is a preferred and advantageous feature of the present invention for the first pedal body platform plate 9A and/or the second pedal body platform plate 9B to have a concave shape. The concave shape can be attained, for instance, by providing pedal body spacer elements 8A and 8B which are raised with respect to the pedal body housing 7. If the pedal body spacer elements 8A and 8B are at the same height (or have the same thickness) as the pedal body housing 7 the surface defined by the first pedal body platform plate 9A and the second pedal body platform plate 9B is flat. Thus, the pedal body spacer elements 8A and 8B advantageously allow "modulating" the concavity of the surface defined by the first pedal body platform plate 9A and the second pedal body platform plate 9B.

The polymer-metal pedal platform construction provided by the combination of the pedal body housing 7, the pedal body spacer 8 and the pedal body platform assembly 9 is in addition particularly advantageous, as it avoids hanging plastic parts on the outer end which could crack if force is applied to the pedal body housing 7.

The polymer-metal pedal platform construction provided by the combination of the pedal body housing 7, the pedal body spacer 8 and the pedal body platform assembly 9 is also particularly advantageous as it allows an optimal distribution of the force which is needed to change the position of the pedal body housing 7 with respect to the axle longitudinal axis A.

Preferably, the maximal swing angle of the pedal body housing 7 from the neutral position along the axle longitudinal axis A is at least 4 degrees in at least one direction on the swing plane around the swing axis X, and more preferably at least 10 degrees in at least one direction on the swing plane around the swing axis X and most preferably up to 20 degrees in at least one direction on the swing plane around the swing axis X. As has been discussed, the adjustment means 11 may be arranged on both sides of the neutral position so as to allow independent adjustment of a maximal swing angle in each direction on the swing plane.

According to a further preferred aspect, the axial length of the pedal axle 1 is more than 50% of the width of the pedal body platform assembly 9. The axial length of the pedal axle 1 advantageously makes it possible to accommodate the swinging at the end of the housing due to the additional available space. The longer pedal axle 1 is advantageous from a structural point of view.

The present invention fully achieves its object and aims. The main benefit of the solution of the present invention versus the prior art is that the polymer-metal pedal platform construction provided by the combination of the pedal body housing 7, the pedal body spacer 8 and the pedal body platform assembly 9 is robust (i.e. has a good structural strength) while avoiding hanging parts and allows a good grip for the shoe of the cyclist in view of its ability to elastically deform. The grip is further improved if the pedal body platforms 9A, 9B are concave. Furthermore, said combination is lightweight.

While the invention herein has been described with respect to flat bicycle pedals, its benefits are also applicable to clipless bicycle pedals since an additional amount of swinging of the bicycle pedal with respect to the pedal axle may be provided in clip less bicycle pedals.

The disclosure of the present invention includes all modifications and equivalents of the subject matter recited in the claims appended hereto as permitted by applicable law. Moreover, any combination of the elements described above in all possible variations thereof is encompassed by the disclosure unless indicated otherwise herein.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realize that the disclosure may be embodied in other specific forms without departing from the disclosure or essential characteristics thereof. The foregoing embodiments are therefore in all respects to be considered illustrative rather than limiting to the disclosure described herein. The scope of the invention is thus indicated by the appended claims, rather than the foregoing description, and all changes that come within the meaning and range of equivalence of the claims are therefore intended to be embraced therein.

### LIST OF REFERENCE NUMERALS

- 1: pedal axle
- 1A: pedal crank attachment section
- 2: bearing seal
- 3: inner bushing assembly
- 4: outer bushing assembly
- 5A: axle member
- 5B: brake shoe member
- 6: adjustment screw for the brake shoe member
- 6A: screw nut for the adjustment screw
- 7: pedal body housing
- 7A: first pedal body housing section
- 7B: second pedal body housing section
- 8: pedal body spacer
- 8A: first pedal body spacer element
- 8B: second pedal body spacer element
- 9: pedal body platform assembly
- 9A: first pedal body platform plate
- 9B: second pedal body platform plate
- 10: mounting pins
- 11: adjustment means / bolts
- 12: outer end of the pedal axle
- 13A: fastening screw for the pedal body housing
- 13B: nut for the pedal body housing
- 14: first spacer pad
- 15: second spacer pad
- 16: inner end of the pedal axle
- 17: recess of the pedal axle
- 18: protrusion of the pedal body housing
- 19: opposite pivot elements of the inner bushing assembly
- 20: matching bearings of the pedal body housing
- 21: seat of the pedal body housing
- 22A: first axial opening
- 22B: second axial opening
- 23A: first arched section
- 23B: second arched section
- 24A: first transversal opening
- 24B: second transversal opening
- A: axle longitudinal axis
- B: housing longitudinal axis
- X: swing axis

## Claims

1. A flat bicycle pedal comprising:
a pedal body housing (7), the pedal body housing (7) having a housing longitudinal axis (B) and holding therein a pedal axle (1) having an axle longitudinal axis (A), wherein the pedal axle (1) is rotatable around the axle longitudinal axis (A), wherein the pedal body housing (7) is made of a composite material including a polymer;
a first pedal body spacer element (8A) arranged on one side of the pedal body housing (7) and a second pedal body spacer element (8B) arranged on the opposite side of the pedal body housing (7), wherein the first pedal body spacer element (8A) and the second pedal body spacer element (8B) are made of a composite material including a polymer;
a pedal body platform assembly (9) comprising a first pedal body platform plate (9A) arranged on one face of the pedal body housing (7) and a second pedal body platform plate (9B) arranged on an opposite face of the pedal body housing (7), the first pedal body platform plate (9A) and the second pedal body platform plate (9B) providing for a support for a shoe sole of a cyclist on the bicycle pedal, wherein the first pedal body platform plate (9A) and the second pedal body platform plate (9B) extend such as to sandwich therebetween the pedal body housing (7) and the first pedal body spacer element (8A) and the second pedal body spacer element (8B) and wherein the first and second pedal body platform plates (9A, 9B) are made of metal; and
mounting pins (10) for securing the first pedal body platform plate (9A) and the second pedal body platform plate (9B) to the pedal body housing (7) and to the first pedal body spacer element (8A) and the second pedal body spacer element (8B).

2. The flat bicycle pedal of claim 1, wherein the mounting pins (10) are devised such as to allow a non-slip support for a shoe sole of a cyclist on the first pedal body platform plate (9A) and on the second pedal body platform plate (9B).

3. The flat bicycle pedal of one or more of the preceding claims, wherein the pedal body housing (7) is formed of:
a first pedal body housing section (7A) defining a first face of the pedal body housing (7), and
a second pedal body housing section (7B) defining a second face of the pedal body housing (7),
wherein the first and second pedal body housing sections (7A, 7B) are separably connected by fastening means (13A, 13B).

4. The flat bicycle pedal of one or more of the preceding claims, wherein the pedal body housing (7) has an opening at an inner end (16) of the pedal axle (1) from which the pedal crank attachment section (1A) extends externally of the pedal body housing (7).

5. The flat bicycle pedal of one or more of the preceding claims, wherein the first and second pedal body platform plates (9A, 9B) are made of stainless steel or titanium.

6. The flat bicycle pedal of one or more of the preceding claims, wherein the pedal body housing (7) and/or the first and second pedal body spacer elements (8A, 8B) are made of the same composite material including carbon fiber and a polymer or glass fiber and a polymer or natural fiber like cotton and a polymer.

7. The flat bicycle pedal of one or more of the preceding claims, wherein the pedal body housing (7) is widened at its respective ends so that the overall shape of the pedal body housing (7) resembles that of a double anchor or a double T.

8. The flat bicycle pedal of one or more of the preceding claims, further comprising a first axial opening (22A) formed between the first pedal body spacer element (8A) and the one side of the pedal body housing (7) and a second axial opening (22B) formed between the second pedal body spacer element (8B) and the opposite side of the pedal body housing (7), wherein preferably the first and the second axial openings (22A, 22B) extend substantially parallel to the axle longitudinal axis (A).

9. The flat bicycle pedal of claim 8, wherein the first and the second axial openings (22A, 22B) are defined by respective arched sections (23A, 23B) extending from the axial ends of the pedal body housing (7) and from the axial ends of the first and the second pedal body spacer elements (8A, 8B), such that substantially circular openings are formed at the respective axial ends of the pedal body housing (7) and of the first and the second pedal body spacer elements (8A, 8B).

10. The flat bicycle pedal of one or more of the preceding claims, wherein a first transversal opening (24A) is defined between the first pedal body spacer element (8A) and the pedal body housing (7) and a second transversal opening (24B) is defined between the second pedal body spacer element (8B) and the pedal body housing (7), wherein preferably the first and second transversal openings (24A, 24B) extend in a direction perpendicular to the pedal body platform assembly (9) and/or wherein preferably the first and second transversal openings (24A, 24B) extend through the first pedal body platform plate (9A) and the second pedal body platform plate (9B).

11. The flat bicycle pedal of one or more of the preceding claims, wherein a surface defined by the first pedal body platform plate (9A) and the second pedal body platform plate (9B) is concave, and wherein preferably the concavity of the surface defined by the first pedal body platform plate (9A) and the second pedal body platform plate (9B) is varied by adjusting the thickness of the first and second pedal body spacer element (8A, 8B) with respect to the thickness of the pedal body housing (7).

12. The flat bicycle pedal of one or more of the preceding claims, wherein the pedal body housing (7) comprises
an inner bushing assembly (3) rotatably attached to the pedal axle (1) at an inner end (16) of the pedal axle (1), the inner bushing assembly (3) holding the pedal axle (1) in a rotatable manner around the axle longitudinal axis (A), wherein the inner bushing assembly (3) is arranged in the pedal body housing (7) such as to allow the swinging of the pedal body housing (7) at least on a swing plane around a swing axis (X) at the inner end (16) of the pedal axle (1) from a neutral position, wherein the housing longitudinal axis (B) is coincident with the axle longitudinal axis (A), to a swung position, wherein the housing longitudinal axis (B) forms an angle with the axle longitudinal axis (A), and
an outer bushing assembly (4) comprising:
an axle member (5A) rotatably attached to the pedal axle (1) at an outer end (12) of the pedal axle (1), the outer end (12) of the pedal axle (1) being opposite to the inner end (16) of the pedal axle (1), and
a brake shoe member (5B) seated in the pedal body housing (7) in a position facing the axle member (5A),
wherein the brake shoe member (5B) frictionally engages the axle member (5A), such that the frictional engagement between the axle member (5A) and the shoe member (5B) restrains the movement of the pedal body housing (7) about the swing axis (X).

13. The flat bicycle pedal of claim 12, wherein the frictional engagement between the axle member (5A) and the shoe member (5B) restrains the movement of the pedal body housing (7) about the swing axis (X) such that the movement of the pedal body housing (7) about the swing axis (X) is only possible once a predefined threshold force has been overcome, and/or wherein the frictional engagement between the axle member (5A) and the shoe member (5B) restrains the movement of the pedal body housing (7) about the swing axis (X) such that the movement of the pedal body housing (7) about the swing axis (X) is slowed down.

14. The flat bicycle pedal of claim 12 or 13, wherein the outer bushing assembly (4) further comprises an adjustment member (6) arranged to be in contact with the shoe member (5B), the adjustment member (6) being displaceable along the housing longitudinal axis (B) to adjust the amount of friction between the axle member (5A) and the shoe member (5B), the adjustment member (6) being preferably an adjustment screw.
